# EUROPEAN PATENT SPECIFICATION

(11) **EP 4 175 804 B1**
(45) Date of publication and mention of the grant of the patent: **17.09.2025**
(21) Application number: 21737036.0
(22) Date of filing: 25.06.2021
(51) Int. Cl.: B28C 5/46, B28C 7/16, C04B 40/00

(54) **METHOD FOR COOLING FRESH CONCRETE**
VERFAHREN ZUM KÜHLEN VON FRISCHBETON
PROCÉDÉ DE REFROIDISSEMENT DE BÉTON FRAIS

(30) Priority: 03.07.2020 DE 102020117592
(43) Date of publication of application: 10.05.2023
(73) Proprietor: L'AIR LIQUIDE, SOCIETE ANONYME POUR L'ETUDE ET L'EXPLOITATION DES PROCEDES GEORGES CLAUDE, 75007 Paris (FR); Air Liquide Deutschland GmbH, 40476 Düsseldorf (DE)
(72) Inventor: BROUNS, Marcel, 40235 Düsseldorf (DE)
(74) Representative: Air Liquide
(86) International application number: PCT/EP2021/067464
(87) International publication number: WO 2022/002779

(56) References cited:
- JP-A- 2006 116 909
- JP-A- H11 324 324
- JP-A- H11 350 735
- JP-A- S6 426 407
- JP-B2- H07 108 537
- US-A- 3 358 976
- US-A- 4 390 282

## Description

The invention relates to a method for cooling fresh concrete, in particular by means of a cryogenic liquid, such as liquid nitrogen or liquid carbon dioxide.

The curing of fresh concrete is an exothermic process. The resulting heat can lead to water in the fresh concrete evaporating at different rates in localized regions. This can in turn give rise to stresses in the cured concrete, which can lead to cracks. The larger a construction and the higher the exterior temperature, the more likely is crack formation to occur in the cured concrete. For this reason, the fresh concrete is normally cooled. Thus, cooling of the constituents of the fresh concrete before mixing, for example, is known. However, the known methods for cooling fresh concrete are inefficient in energy terms. In addition, the known methods are essentially manual and correspondingly laborious.

JP-A-2006116909 discloses a cooling device in a ready-mixed concrete manufacturing facility, with one or a plurality of coolers corresponding to a predetermined facility, among the facilities arranged in each manufacturing stage of the ready-mixed concrete manufacturing facility.

JPH07108537B discloses a process for manufacturing cooled concrete using cryogenic liquefied gas. According to said disclosure, cryogenic liquefied gas is injected into a closed airtight coarse-aggregate container, thereby cooling the coarse aggregate before supplying same to a concrete mixer. Thereafter, the cryogenic gas is removed from the top of the coarse-aggregate container and used for cooling the kneading water. Kneading water is also cooled by heat exchange through the outer body wall of the coarse-aggregate reservoir. The cooled kneading water is likewise supplied to the concrete mixer.

JPH11324324 discloses a first method for mixing carbon dioxide with fresh concrete being pressure-fed through a concrete pressure-feeding pipe. According to said method, liquid carbon dioxide is pumped in a controlled manner from a carbon-dioxide storage facility so as to form particulate dry ice which is added to and mixed with the fresh concrete. The mixing device for mixing carbon dioxide with fresh concrete includes a nozzle device with a communication pipe which penetrates the wall of the concrete pressure-feeding pipe, the nozzle of which is arranged substantially in the center portion of the cross-section of the concrete pressure-feeding pipe. A heating element may be provided around the communication pipe and the nozzle to prevent clogging.

JPH11350735 discloses a method of injecting a quick-setting agent in fresh concrete that is pumped through a concrete pressure-feeding pipe and mixing the quick-setting agent with the fresh concrete. Thereto, a ribbon-shaped spiral is arranged along the inner peripheral surface of the pressure-feeding pipe, the ribbon-shaped spiral presenting a large number of nozzle holes in the concrete pressure-feeding direction through which the quick-setting agent is injected into the fresh concrete before the mixture of fresh concrete and quick-setting agent is discharged. The quick setting agent may be carbon dioxide in liquid form or dry ice, causing cooling of the fresh concrete by sensible heat or latent heat of carbon dioxide gas evaporation or sublimation. US-A-3358976, on the other hand, relates to the heating concrete ingredients with steam during winter operation of batching facilities. Thereto, US-A-3358976 proposes an assembly comprising a bin discharge gate for granular material moving out of a bin, the bin discharge gate having a body of generally rectangular cross-section and gate closure members movable across one end of the gate body toward and away from a transverse axis bisecting the area enclosed by said one end of the gate body. The assembly further comprises a rectangular frame adapted to be removably inserted into the other end of the gate body, a grid structure carried by said frame comprising two parallel header tubes with parallel transverse tubes extendin-between said header tubes, one of said header tubes being adapted to receive steam applied thereto, the transverse tubes extending parallel to said transverse axis defining the terminus of motion of said gate closure members and being spaced from each other a distance slightly greater than the maximum dimension of granules within the bin. The transverse tubes have steam discharge apertures spaced along the length thereof, whereby the material in the bin moving toward the discharge gate sweeps said transverse tubes and is heated by steam issuing from said steam apertures.

It is an object of the present invention to provide, proceeding from the prior art which has been described, a more efficient and automated method for cooling fresh concrete with a corresponding apparatus and arrangement.

These objects are achieved by the method according to the independent claim. Further advantageous embodiments are indicated in the dependent claims.

The arrangement for filling a mixer with cooled fresh concrete used in the method of the invention comprises an apparatus for cooling fresh concrete. The apparatus comprises a frame. The frame surrounds an open section through which the fresh concrete can flow. The apparatus further comprises an injection structure attached to the frame. Said injection structure extends inwardly from the frame. The injection structure has at least one nozzle for discharging a coolant into the fresh concrete, when said fresh concrete flows through the open section. For that purpose, each said nozzle is in fluid connection with a coolant inlet of the apparatus.

For the purposes of the present invention, fresh concrete is concrete before curing. As a result of curing, also referred to as "setting", fresh concrete is converted into cured concrete. Fresh concrete can also be referred to as new concrete or wet concrete. Fresh concrete can be obtained by mixing the constituents of concrete, in particular cement, sand and water. As long as the mixture thus obtained can be shaped and/or compacted, it is referred to as fresh concrete.

The cooling of the fresh concrete can proceed automatically. As soon as the apparatus described has been installed at the desired place, it is sufficient to switch on a coolant supply in order to cool the fresh concrete. This can be computer controlled and/or remotely controlled. The coolant supply can also be switched on automatically, for example, when a sensor detects that fresh concrete is flowing through the open section of the apparatus. When no more flowing fresh concrete is detected, the coolant supply can be switched off automatically. Apart from maintenance work, no handling by operating personnel is necessary for cooling the fresh concrete in this case.

The fresh concrete is thus cooled by means of a coolant. The coolant is preferably a liquefied gas. The term liquefied gas refers to a liquefied substance which is gaseous under normal conditions (atmospheric pressure and ambient temperatures). The coolant is preferably a cryogenic material. In particular, it is possible to use nitrogen, helium, neon, argon, air, oxygen or carbon dioxide, especially in liquefied form, as coolant. A combination of these materials is also possible. The coolant is preferably an inert gas (i.e. gaseous under normal conditions), in particular, nitrogen. Preference is also given to carbon dioxide as the coolant.

The apparatus comprises a frame and an injection structure which is attached to the frame and which extends inwardly from the frame.

Due to the fact that the injection structure extends inwardly from the frame, the coolant is injected within the fresh concrete flowing through the open section, as opposed to towards a stream of flowing concrete. The contact between the coolant and the fresh concrete is therefore more intense and the cooling effect is thereby increased.

The injection structure may be entirely located within the open section which is surrounded by the frame, i.e. in the case of a planar frame: located within the plane of the frame. The injection structure may also extend inwardly and upstream of the frame or inwardly and downstream of the frame, whereby upstream and downstream refer to the flow direction of the fresh concrete through the open section of the frame.

It will be appreciated that, as the injection structure is generally a static injection structure, less maintenance will be required when compared with mechanically moving injection structures, such as agitators equipped with injection nozzles.

According to a preferred embodiment, the injection structure comprises at least one spoke which points inwardly from the frame. The at least one spoke is preferably attached directly to the frame. The frame and/or the injection structure/the spoke(s) are preferably made of hardened, in particular stainless, steel. When the apparatus is used as intended, fresh concrete flows through the open section surrounded by the frame. Preferably, all of the flowing fresh concrete flows through the open section surrounded by the frame. However, it is also possible for the frame to be completely enclosed in a stream of fresh concrete, so that part of the flowing fresh concrete flows through the open section surrounded by the frame and a further part of the fresh concrete flows along the outside of the frame. The fact that fresh concrete can flow through the open section of the frame is also reflected in the size of the frame, or rather the size of the open section thereof. The open section surrounded by the frame preferably has a dimension in the range from 20 to 100 cm, in particular in the range from 40 to 70 cm, in all directions. The frame is preferably configured as a ring or cylinder. In this case, the frame surrounds a circular open section. The diameter of the open section surrounded by the ring or cylinder is preferably in the range from 20 to 100 cm, in particular in the range from 40 to 70 cm. Particularly in the case of a ring, the spokes are preferably arranged radially with respect to the frame.

The frame provides rigidity. It serves, in particular, to hold the injection structure. Preference is given to an injection structure comprising a plurality of spokes with one or more injection nozzles. The following description generally relates to this case, but as far as possible also applies analogously to the case of a single spoke or to injection structures with a different configuration.

The coolant is introduced into the fresh concrete via the spokes when the fresh concrete flows through the frame and thus past the spokes. For this purpose, the spokes have at least one nozzle. The spokes preferably have a plurality of nozzles. The following description relates to this case, but as far as possible also applies analogously to the case of a single nozzle.

One or more nozzles can in each case be arranged on each of the spokes. However, it is not necessary for a nozzle to be arranged on each of the spokes. It is even conceivable that all nozzles are arranged on the same spoke.

The nozzles can be held within a stream of fresh concrete by means of the frame to which the spokes are attached. The coolant flowing out from the nozzles is then enclosed by the fresh concrete. The fresh concrete can be cooled particularly efficiently in this way because the coolant becomes distributed through the fresh concrete and is enclosed therein. The fresh concrete is therefore cooled not only by the enthalpy of vaporization but also by the gas formed on vaporization. The latter would be released unutilized into the surroundings if the coolant were not enclosed by the fresh concrete. This gives more efficient cooling compared to, in particular, cooling of the fresh concrete stream from the outside, i.e. with a coolant jet directed at the surface of the fresh concrete. Accordingly, the apparatus makes do with a particularly low coolant consumption.

In addition, the apparatus makes particularly uniform cooling of the fresh concrete possible.

This has the advantage that fresh concrete can be cooled with great reproducibility. Furthermore, particularly cold places in the fresh concrete, known as "cold spots", can be prevented by the uniform cooling. Such cold spots could, for example, damage a transport vehicle. Thus, for example, nitrogen has a boiling point of -196°C. Transport vehicles for fresh concrete are usually not suitable for such low temperatures. This has hitherto made the use of cryogenic materials for cooling fresh concrete difficult.

Furthermore, in the cooling of fresh concrete by means of cryogenic materials there is the fundamental problem that usually large amounts of these materials are released into the surroundings. Thus, a cloud of nitrogen can be liberated in the cooling of fresh concrete by means of liquid nitrogen. Although nitrogen as such is not hazardous to health, human beings can be injured by the low temperatures of nitrogen liberated. In addition, a nitrogen cloud can displace the surrounding air to such an extent that there is no longer sufficient oxygen available for breathing. The liberation of vaporized coolant can be prevented or in any case reduced or distributed over time by means of the apparatus described to such an extent that the problems described no longer occur or occur only to an acceptable extent. Particularly safe cooling of fresh concrete is thus possible by means of the apparatus described. In addition, the cooling of fresh concrete by means of the apparatus described is advantageous compared to known methods. Thus, the apparatus described is particularly cheap to procure, especially compared to cooling in a ready-mixed concrete vehicle.

In a preferred embodiment of the invention, the injection structure, such as the at least one spoke, is at least partly hollow so that the coolant can flow from a coolant inlet of the apparatus through the injection structure/one or more of the spokes to the nozzle.

In this embodiment, said hollow part of the injection structure/spokes serves as conduit(s) for the coolant. This assists construction because, apart from the injection structure/spokes, no separate conduits are required within the frame. In addition, the spokes are cooled by the coolant when the coolant flows through the spokes. The fresh concrete can in this way be additionally cooled by contact with the surfaces of the hollow part of the injection structure/spokes.

The statement that the injection structure/spokes are at least partly hollow means that at least a section of one of the spokes is hollow. It is sufficient for the injection structure/spokes to be hollow only in the sections via which the coolant can reach the nozzles. However, it is also possible for other parts of the injection structure or even the entire injection structure to be hollow. Thus, one, more than one or all of the spokes may be completely hollow. In particular, preference is given to the entire injection structure/all spokes being completely hollow. Here, the hollow parts/spokes are preferably connected to one another. The coolant can as a result spread from the one coolant inlet through the entire injection structure/all spokes. The nozzles are preferably formed as openings in the spokes.

If more than one nozzle is provided, preference is given to there being, for each of the nozzles, at least one flow path which leads from the coolant inlet via one or more of the spokes to the respective nozzle. Some of the flow paths can run jointly. A plurality of flow paths can lead to one nozzle.

In a further preferred embodiment of the invention, a plurality of the spokes come together radially in the center of the open section of the frame or on a frame axis through said center, with at least one of the nozzles being arranged in the center of the open section or on a frame axis through said center.

In this embodiment, the apparatus has a plurality of spokes attached to the frame. The spokes are preferably connected to one another in the center of the frame. In the case of hollow spokes, this is preferably realized in such a way that the coolant can flow from one of the spokes into one or more of the other spokes in the center of the open section of the frame. The coolant can therefore spread over the spokes as a result of the connection of the spokes in the center.

Preference is given to precisely one nozzle being arranged in the center. It is not necessary for this nozzle to be able to be assigned to one of the spokes. It is sufficient for the nozzles all to be able to be assigned to the spokes. Thus, one or more of the nozzles can be arranged exactly where the spokes come together.

The coolant can be introduced centrally into a stream of the fresh concrete by means of a nozzle arranged in the center of the open section of the frame. The advantages described for the apparatus can thus be achieved particularly well by means of this nozzle. The nozzle arranged in the center can be referred to as a central nozzle.

In a further preferred embodiment of the invention, a plurality of the spokes come together radially in the center of the open section of the frame, with at least one of the nozzles being arranged spaced apart from the center.

In this embodiment, at least one nozzle which, as a distinction from the above-described central nozzle, can be referred to as noncentral nozzle, is provided. The apparatus preferably has a plurality of nozzles for discharge of a coolant into the fresh concrete arranged spaced apart from the center.

Any combination of one or more central nozzles and one or more noncentral nozzles is possible.

The apparatus preferably has one central nozzle and a plurality of noncentral nozzles.

In a further preferred embodiment of the invention, the at least one spoke has a droplet-shape cross section.

If the apparatus has more than one spoke, the spokes preferably all have a droplet-shape cross section. Preference is given to all spokes each having a droplet-shape cross section over their entire length.

For the purposes of the present invention, a droplet-shape cross section means that the cross section widens downward from a point at the top and finally goes over into a round section. The terms "top" and "below" are based on the fresh concrete flowing from the top downward through the apparatus described. This is preferred because the fresh concrete can be moved by the Earth's gravity. However, the apparatus can also be used in any orientation as a result of the fresh concrete being driven by, for example, a pump. Instead of the description of the cross section as "droplet-shape", the cross section can also be described as having a section which runs to a point in a direction opposite the flow direction of the fresh concrete. The shaping of the spokes as per this embodiment can prevent deposits of the fresh concrete on the spokes. Such a droplet-shaped cross section may also be applied to alternative embodiments of the injection structure.

The arrangement for filling a transport vehicle with cooled fresh concrete has a transfer element via which the fresh concrete can be introduced into the transport vehicle. In the arrangement the transfer element is equipped with an apparatus configured as described, so that, when fresh concrete is made to flow through the transfer element, at least part of the flowing concrete flows through the open section of the apparatus.

The apparatus is preferably adapted for the arrangement. For example, the frame of the apparatus may have an outer circumference corresponding essentially to an inner cross-section of the transfer element, so that the frame can easily be mounted in the transfer element and can preferably also being taken out of the transfer element for cleaning, maintenance or replacement.

The arrangement preferably comprises a respective source for all constituents of the fresh concrete, for example a silo for cement, a sand store and a water connection. Furthermore, the arrangement preferably has a mixing device by means of which the constituents can be mixed in order to obtain the fresh concrete. The arrangement preferably has the transfer element directly adjoining the mixing device. The transfer element is preferably configured as a transfer funnel. As an alternative, the transfer element can be a pipe section. The transport vehicle, which is not part of the arrangement, can thus be driven under the transfer element so that the fresh concrete immediately after mixing of the constituents, i.e. immediately after formation of the fresh concrete, can be conveyed from the transfer element of the arrangement into an inlet funnel of the transport vehicle.

The apparatus described is provided on the transfer element. This means that the apparatus adjoins the transfer element upstream of the transfer element, adjoins the transfer element downstream of the transfer element or is integrated into the transfer element. As a result of this positioning of the apparatus, the fresh concrete is cooled directly on introduction into the transport vehicle. Cooling can thus be carried out in the concrete works. A coolant supply on a construction site is not necessary.

According to the method of the invention, the fresh concrete is conveyed through an apparatus which comprises a frame defining an open section through which the fresh concrete can flow and an injection structure, such as at least one spoke, attached to the frame and extending inwardly therefrom. A coolant is introduced into the fresh concrete via the injection structure.

The advantages and features described for the apparatus and the arrangement are applicable and transferable to the method, and vice versa. The apparatus and the arrangement are each suitable for operation according to the method. The method is carried out with the arrangement. The coolant is introduced into the fresh concrete via the injection structure/spokes, in particular by the coolant being discharged from one or more nozzles on the injection structure/spokes.

In a preferred embodiment of the method, the coolant is nitrogen, carbon dioxide or a mixture of nitrogen and carbon dioxide.

The coolant is preferably liquid nitrogen, liquid carbon dioxide or a mixture of liquid nitrogen and liquid carbon dioxide.

Nitrogen is readily available and comparatively cheap. In addition, nitrogen is inert. Nitrogen therefore does not react with the fresh concrete. The fresh concrete is thus only cooled and not otherwise changed by nitrogen as coolant.

The fresh concrete can be partially carbonized by using carbon dioxide. Carbon dioxide which has, for example, been formed as offgas in an industrial production process can, in this manner, be bound in the fresh concrete. This carbon dioxide can thereby be prevented from getting into the atmosphere in order to protect the environment. In that case, the method described serves not only to cool the fresh concrete but also to protect the environment.

A chemical reaction can occur between the carbon dioxide and the fresh concrete. The carbon dioxide can thus be bound chemically into the fresh concrete. It is in this respect advantageous that the carbon dioxide can be distributed particularly uniformly in the fresh concrete by means of the method described. The chemical reaction between the carbon dioxide and the fresh concrete can thus proceed particularly efficiently, while ensuring sufficient homogeneity of the partially carbonated fresh concrete.

The above-described advantages can be combined with one another when using a mixture of nitrogen and carbon dioxide.

In a further preferred embodiment, the coolant comprises nitrogen, helium, neon, argon, air, oxygen and/or carbon dioxide.

The coolant can be any mixture of one or more of the abovementioned materials, optionally also with further materials. Depending on the choice of the coolant, the advantages of the various materials can be utilized individually or together.

In a further preferred embodiment of the method, the fresh concrete is cooled during filling of a transport vehicle. The coolant preferably comprises liquid nitrogen, liquid helium, liquid neon, liquid argon, liquid air, liquid oxygen and/or liquid carbon dioxide. The fresh concrete can similarly be cooled while it is being poured from the transport vehicle, in particular by having an apparatus mounted in or on a concrete outlet of the vehicle.

The invention will be illustrated in more detail below with the aid of the figures. The figures show a first particularly preferred working example and a second alternative working example, of the apparatus, respectively of the arrangement used in accordance to the invention, but the invention is not restricted to these. The figures and the size ratios depicted therein are purely schematic. The figures show:
- Fig. 1:: a plan view of an apparatus of the arrangement for use in the method according to the invention for cooling fresh concrete,
- Fig. 2:: a cross-sectional view of part of the apparatus of Fig. 1,
- Fig. 3:: a side view of an arrangement for use in the method according to the invention for filling a transport vehicle with cooled fresh concrete,
- Fig. 4:: an enlargement of part of Fig. 3,
- Fig. 5:: a top view of an alternative embodiment of the apparatus of the arrangement for use in the method according to the invention,
- Fig. 6:: a front view of the apparatus of figure 5.

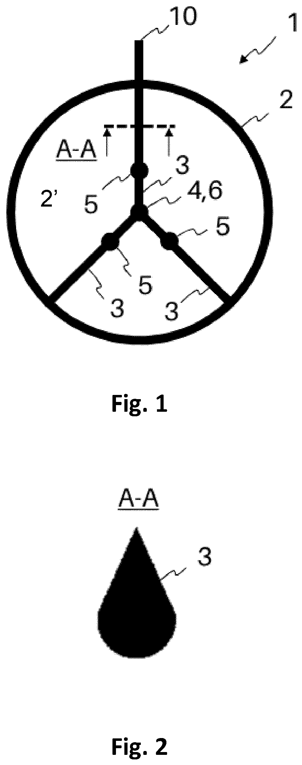

Fig. 1 shows a plan view of an apparatus 1 for cooling fresh concrete. The apparatus 1 comprises a frame 2 which is configured as a ring and through which the fresh concrete to be cooled can flow. The frame surrounds a circular open section 2'. In the depiction shown, the fresh concrete can flow through the open section 2' of the frame 2 perpendicularly to the plane of the drawing. The apparatus 1 further comprises a plurality of spokes attached to and 3 arranged radially in the frame 2. In the embodiment shown, there are three spokes 3. The spokes 3 have nozzles 4, 5 for discharge of a coolant into the fresh concrete. Possible coolants are, in particular, liquid nitrogen and liquid carbon dioxide. When the fresh concrete flows through the open section 24 of frame 2, the coolant can be discharged into the fresh concrete via the nozzles 4, 5, so that the fresh concrete is cooled by the coolant.

The apparatus 1 has a coolant inlet 10. The spokes 3 are at least partly hollow so that the coolant can flow from the coolant inlet 10 through the spokes 3 to the nozzles 4, 5. The spokes 3 come together radially in the center 6 of the open section 2' of frame 2. One of the nozzles 4 is arranged in the center 6 of the frame 2. Nozzle 4 will be referred to as the central nozzle. The three remaining nozzles 5 are arranged outside the center 6 of frame 2. As a distinction from the central nozzle 4, these nozzles 5 are referred to as noncentral nozzles.

Fig. 2 shows a cross section of part of the apparatus 1 along the marked line A-A in Fig. 1. One of the spokes 3 is shown here. It can be seen that the spoke 3 has a droplet-shape cross section. This spoke 3 has this cross section even outside the marked line A-A. The remaining spokes 3 likewise have this cross section. In use as intended, the fresh concrete flows from the top downward in the depiction of Fig. 2. Due to the droplet-shape cross section of the spokes 3, deposits of the fresh concrete on the spokes 3 can be prevented.

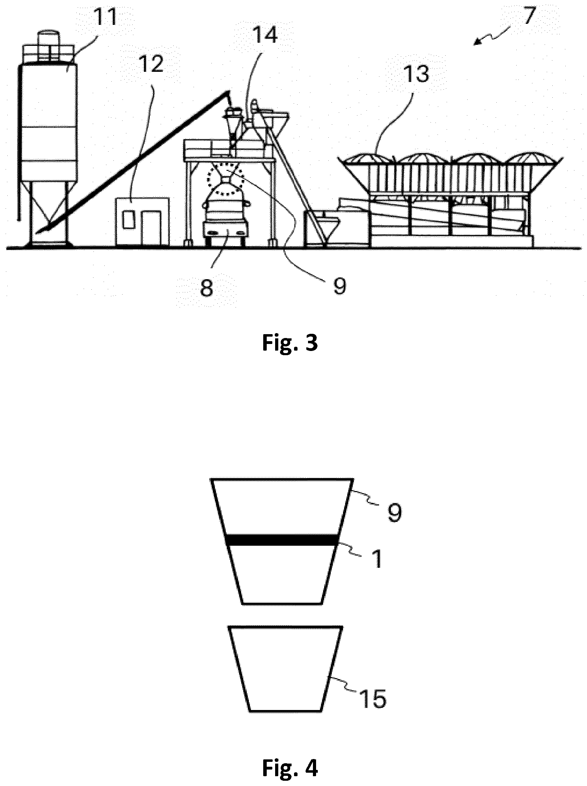

Fig. 3 shows an arrangement 7 for filling a transport vehicle 8 with cooled fresh concrete. The arrangement 7 comprises a silo 11 in which cement can be stored. Furthermore, arrangement 7 has a sand store 13. The cement and the sand can be mixed together with water in a mixing device 14. The fresh concrete formed in this way can be introduced into a transport vehicle 8 via a transfer element 9 configured as a transfer funnel. The process can be controlled from a control building 12. The arrangement 7 has the apparatus 1 of Fig. 1 on the transfer element 9. This is shown in Fig. 4.

Fig. 4 is an enlargement of the part of the arrangement 7 indicated by a dotted circle in Fig. 3. The transfer element 9 of the arrangement 7 with the apparatus 1 can be seen therein. An inlet funnel 15 of the transport vehicle 8 is shown under the transfer element 9. The transport vehicle 8 with the inlet funnel 15 is not part of the arrangement 7. Fresh concrete can be discharged from the arrangement 7 via the transfer element 9 into the inlet funnel 15 of the transport vehicle 8. The fresh concrete thus flows through the apparatus 1 and can be cooled thereby.

A coolant such as liquid nitrogen or liquid carbon dioxide can be introduced into fresh concrete by means of apparatus 1 in such a way that the coolant is enclosed by the fresh concrete. In this way, the fresh concrete can be cooled particularly efficiently without large amounts of the coolant being released into the environment and without the fresh concrete becoming so cold in places that damage to, for example, a transport vehicle 8 can occur. The apparatus 1 can, in particular, be used during filling of the transport vehicle 8.

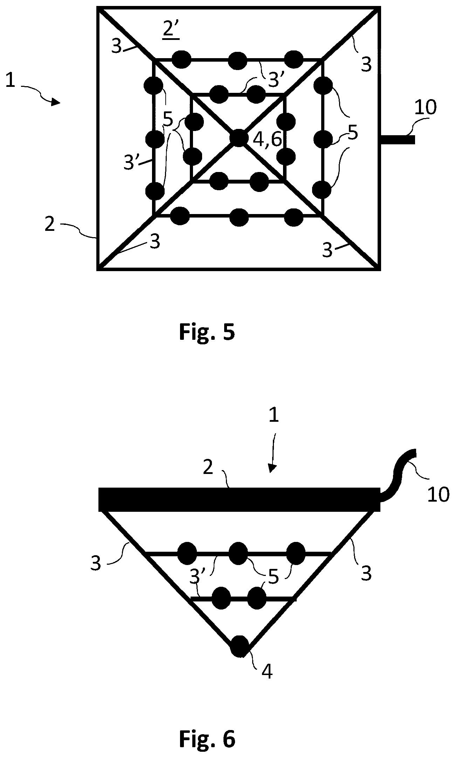

The apparatus shown in figures 5 and 6 differs from the apparatus of figure 1 in that:
- frame 2 is square rather than ring-shaped, so that open section 2' is likewise square rather than circular,
- the injection structure is roughly pyramid-shaped and extends both inwardly from the frame (i.e. towards the center) and downstream with respect to the frame and according to the flow direction of the concrete, as a consequence, central nozzle 4 is located on an axis of the frame through the center of open section 2',
- spokes 3 are interconnected by hollow connectors 3', the noncentral nozzles 5 being located on said connectors 3' and not directly on spokes 3.

### List of reference numerals

- 1: Apparatus
- 2: Frame
- 2': Open Section
- 3: Spoke
- 3': Connector
- 4: Central nozzle
- 5: Noncentral nozzle
- 6: Center
- 7: Arrangement
- 8: Transport vehicle
- 9: Transfer element
- 10: Coolant inlet
- 11: Silo
- 12: Control building
- 13: Sand store
- 14: Mixing device
- 15: Inlet funnel

## Claims

1. A method for cooling fresh concrete when filling a mixer (8) with fresh concrete, whereby an arrangement (7) is used having:
(a) a transfer element (9) via which the fresh concrete is introduced into the mixer (8) and
(b) an apparatus (1) for cooling the fresh concrete, the apparatus (1) comprising a frame (2) surrounding an open section (2'), the apparatus (1) being mounted on or in the transfer element (9) so that the fresh concrete being introduced into the mixer (8) via the transfer element (9) flows through the open section of the apparatus (1) and comprising an injection structure attached to the frame (2) and extending inwardly from the frame (2) and having at least one nozzle (4, 5), each nozzle (4,5) being in fluid connection with an inlet of the apparatus (1);
wherein a coolant is supplied to the inlet (10) of the apparatus (1) and the coolant is introduced into the fresh concrete flowing through the open section via the at least one nozzle (4, 5) of the apparatus (1).

2. The method as claimed in claim 1, whereby the injection structure comprises one or more spokes (3) pointing inwardly from the frame (2).

3. The method as claimed in claim 2, wherein at least one of the one or more spokes (3) has at least one of the nozzles (4, 5) for discharge of a coolant into the fresh concrete flowing through the open section (2').

4. The method as claimed in claim 3, wherein the spoke or spokes (3) having at least one of the nozzles (4, 5) is/are at least partly hollow so that the coolant flows through said spoke or spokes (3) to the nozzle or nozzles (4, 5) of said spoke or spokes (3).

5. The method as claimed in any one of claims 2 to 4, wherein a plurality of the spokes (3) come together radially in the center (6) of the frame (2) and at least one of the nozzles (4) is arranged in the center (6) of the open section (2') of the frame (2).

6. The method as claimed in any of claims 2 to 5, wherein a plurality of the spokes (3) come together radially in the center (6) of the frame (2) and at least one of the nozzles (5) is arranged outside the center (6) of the frame (2).

7. The method as claimed in any of claims 2 to 6, wherein the at least one spoke (3) has a droplet-shape cross section.

8. The method as claimed in claim 1, whereby the frame (2) has an outer circumference corresponding essentially to an inner cross-section of the transfer element (9).

9. The method as claimed in any one of the preceding claims, wherein the coolant is nitrogen, carbon dioxide or a mixture of nitrogen and carbon dioxide, preferably in liquefied form.

10. The method as claimed in any one of claims 1 to 8, wherein the coolant comprises nitrogen, helium, neon, argon, air, oxygen and/or carbon dioxide, preferably in liquefied form.

11. The method as claimed in any of the preceding claims, wherein the coolant supply is computer controlled and/or remotely controlled.

12. The method as claimed in claim 11, whereby the coolant supply is switched on automatically when a sensor detects that fresh concrete is flowing through the open section (2') of the apparatus and, when no flowing fresh concrete is detected, the coolant supply is switched off automatically.

13. The method as claimed in any one of the preceding claims, whereby the mixer (8) is mounted on a transport vehicle.

## Patentansprüche

1. Verfahren zum Kühlen von Frischbeton bei Füllen eines Mischers (8) mit Frischbeton, wobei eine Anordnung (7) verwendet wird, die aufweist:
(a) ein Überführungselement (9), über das der Frischbeton in den Mischer (8) eingeführt wird, und
(b) eine Vorrichtung (1) zum Kühlen des Frischbetons, wobei die Vorrichtung (1) einen Rahmen (2) umfasst, der einen offenen Abschnitt (2') umgibt, wobei die Vorrichtung (1) auf oder in dem Überführungselement (9) montiert ist, so dass der über das Überführungselement (9) in den Mischer (8) eingeführte Frischbeton durch den offenen Abschnitt der Vorrichtung (1) fließt, und eine an dem Rahmen (2) befestigte Injektionsstruktur umfasst, die von dem Rahmen (2) nach innen verläuft und wenigstens eine Düse (4, 5) aufweist, wobei sich jede Düse (4, 5) mit einem Einlass der Vorrichtung (1) in Fluidverbindung befindet;
wobei dem Einlass (10) der Vorrichtung (1) ein Kühlmittel zugeführt wird und das Kühlmittel über die wenigstens eine Düse (4, 5) der Vorrichtung (1) in den Frischbeton, der durch den offenen Abschnitt fließt, eingeführt wird.

2. Verfahren nach Anspruch 1, wobei die Injektionsstruktur eine oder mehrere Speichen (3) umfasst, die von dem Rahmen (2) nach innen zeigen.

3. Verfahren nach Anspruch 2, wobei wenigstens eine der einen oder mehreren Speichen (3) wenigstens eine der Düsen (4, 5) zum Ausgeben eines Kühlmittels in den Frischbeton, der durch den offenen Abschnitt (2') fließt, aufweist.

4. Verfahren nach Anspruch 3, wobei die Speiche oder Speichen (3), die wenigstens einer der Düsen (4, 5) aufweisen, wenigstens teilweise hohl ist/sind, so dass das Kühlmittel durch die Speiche oder Speichen (3) zu der Düse oder den Düsen (4, 5) der Speiche oder Speichen (3) fließt.

5. Verfahren nach einem der Ansprüche 2 bis 4, wobei eine Vielzahl der Speichen (3) radial in der Mitte (6) des Rahmens (2) zusammenkommt und wenigstens eine der Düsen (4) in der Mitte (6) des offenen Abschnitts (2') des Rahmens (2) angeordnet ist.

6. Verfahren nach einem der Ansprüche 2 bis 5, wobei eine Vielzahl der Speichen (3) radial in der Mitte (6) des Rahmens (2) zusammenkommt und wenigstens eine der Düsen (5) außerhalb der Mitte (6) des Rahmens (2) angeordnet ist.

7. Verfahren nach einem der Ansprüche 2 bis 6, wobei die wenigstens eine Speiche (3) einen tropfenförmigen Querschnitt aufweist.

8. Verfahren nach Anspruch 1, wobei der Rahmen (2) einen Außenumfang aufweist, der im Wesentlichen einem Innenquerschnitt des Überführungselements (9) entspricht.

9. Verfahren nach einem der vorstehenden Ansprüche, wobei das Kühlmittel Stickstoff, Kohlendioxid oder ein Gemisch von Stickstoff und Kohlendioxid ist, vorzugsweise in verflüssigter Form.

10. Verfahren nach einem der Ansprüche 1 bis 8, wobei das Kühlmittel Stickstoff, Helium, Neon, Argon, Luft, Sauerstoff und/oder Kohlendioxid umfasst, vorzugsweise in verflüssigter Form.

11. Verfahren nach einem der vorstehenden Ansprüche, wobei die Kühlmittelzufuhr computergesteuert und/oder ferngesteuert ist.

12. Verfahren nach Anspruch 11, wobei die Kühlmittelzufuhr automatisch eingeschaltet wird, wenn ein Sensor erfasst, dass Frischbeton durch den offenen Abschnitt (2') der Vorrichtung fließt, und die Kühlmittelzufuhr automatisch abgeschaltet wird, wenn kein fließender Frischbeton erfasst wird.

13. Verfahren nach einem der vorstehenden Ansprüche, wobei der Mischer (8) auf einem Transportfahrzeug montiert ist.

## Revendications

1. Procédé de refroidissement de béton frais lors du remplissage d'un mélangeur (8) avec du béton frais, un agencement (7) étant utilisé comprenant :
(a) un élément de transfert (9) par l'intermédiaire duquel le béton frais est introduit dans le mélangeur (8) ; et
(b) un appareil (1) pour le refroidissement du béton frais, l'appareil (1) comprenant un cadre (2) entourant une section ouverte (2'), l'appareil (1) étant monté sur ou dans l'élément de transfert (9) de sorte que le béton frais introduit dans le mélangeur (8) par l'intermédiaire de l'élément de transfert (9) s'écoule à travers la section ouverte de l'appareil (1) et comprenant une structure d'injection fixée au cadre (2) et s'étendant vers l'intérieur à partir du cadre (2) et comportant au moins une buse (4, 5), chaque buse (4, 5) étant en communication fluidique avec une entrée de l'appareil (1) ;
un agent de refroidissement étant fourni à l'entrée (10) de l'appareil (1) et l'agent de refroidissement étant introduit dans le béton frais s'écoulant à travers la section ouverte via l'au moins une buse (4, 5) de l'appareil (1).

2. Procédé selon la revendication 1, la structure d'injection comprenant un ou plusieurs rayons (3) dirigés vers l'intérieur à partir du cadre (2).

3. Procédé selon la revendication 2, au moins un du ou des rayons (3) étant pourvu d'au moins l'une des buses (4, 5) pour l'évacuation d'un agent de refroidissement dans le béton frais s'écoulant à travers la section ouverte (2').

4. Procédé selon la revendication 3, le ou les rayons (3) qui ont au moins l'une des buses (4, 5) étant au moins partiellement creux de sorte que l'agent de refroidissement s'écoule à travers ledit rayon ou lesdits rayons (3) vers la buse ou les buses (4, 5) dudit rayon ou desdits rayons (3).

5. Procédé selon l'une quelconque des revendications 2 à 4, une pluralité de rayons (3) se rejoignant radialement au centre (6) du cadre (2) et au moins l'une des buses (4) étant agencée au centre (6) de la section ouverte (2') du cadre (2).

6. Procédé selon l'une quelconque des revendications 2 à 5, une pluralité des rayons (3) se rejoignant radialement au centre (6) du cadre (2) et au moins l'une des buses (5) étant agencée à l'extérieur du centre (6) du cadre (2).

7. Procédé selon l'une quelconque des revendications 2 à 6, l'au moins un rayon (3) présentant une section transversale en forme de goutte.

8. Procédé selon la revendication 1, le cadre (2) ayant une circonférence extérieure correspondant essentiellement à une section transversale interne de l'élément de transfert (9).

9. Procédé selon l'une quelconque des revendications précédentes, l'agent de refroidissement étant de l'azote, du dioxyde de carbone ou un mélange d'azote et de dioxyde de carbone, de préférence sous forme liquéfiée.

10. Procédé selon l'une quelconque des revendications 1 à 8, l'agent de refroidissement comprenant de l'azote, de l'hélium, du néon, de l'argon, de l'air, de l'oxygène et/ou du dioxyde de carbone, de préférence sous forme liquéfiée.

11. Procédé selon l'une quelconque des revendications précédentes, l'alimentation en agent de refroidissement étant commandée par ordinateur et/ou télécommandée.

12. Procédé selon la revendication 11, l'alimentation en agent de refroidissement étant activée automatiquement lorsqu'un capteur détecte que du béton frais s'écoule à travers la section ouverte (2') de l'appareil et, lorsqu'aucun béton frais s'écoulant n'est détecté, l'alimentation en agent de refroidissement étant désactivée automatiquement.

13. Procédé selon l'une quelconque des revendications précédentes, le mélangeur (8) étant monté sur un véhicule de transport.
